# EUROPEAN PATENT APPLICATION

(11) **EP 3 753 792 A1**
(43) Date of publication of application: **23.12.2020**
(21) Application number: 20179619.0
(22) Date of filing: 12.06.2020
(51) Int. Cl.: B60T 1/14

(54) **EMERGENCY BRAKE**

(30) Priority: 18.06.2019 CZ 20190382
(71) Applicant: Rous, Karel, 66471 Hvozdec (CZ)
(72) Inventor: Rous, Karel, 66471 Hvozdec (CZ)
(74) Representative: Benda, Tomas

(57) **Abstract**

Emergency brake (1) connected to a control unit (2) of a vehicle, wherein the emergency brake (1) comprises a braking segment (5) connected to the bottom of the vehicle by an expansible actuator (6), which is designed to push the braking segment (5) towards a road, when a braking impulse is transmitted from the control unit (2), wherein the emergency brake (1) is designed to be rotary at a plane parallel to the surface of a road, wherein the braking segment (5) is connected to the vehicle by supporting element (9), which is rotary connected by a shaft (10) with the actuator (11) of rotational movement, which is firmly connected to the vehicle.

## Description

### Background of the invention

The present invention concerns an emergency brake for vehicles.

### State of the art

Nowadays, vehicles are braked by braked wheels, which are rolling over the surface of a road. Such braking should be divided into two phases. In the first phase a wheel is slowed down or completely stopped. The second phase is called "passive braking", where the braking force is defined by kinetical force of the vehicle and by size of the friction surface between its wheel and the surface of a road.

Known brake down systems are drum brakes or disk brakes, which however works only in the first above mentioned phase. The second phase is not effected by them.

Better systems are the ABS brake down system, which works with the drum brakes or the disc brakes, which brake a wheel down in periodically repeated intervals, i.e. it changes static and dynamic braking, to improve the brake down effect. Even this system doesn't affect the static braking, just shortens it's braking time.

A document JPH10157581A presents an emergency brake comprises a braking segment connected with the lower part of vehicle by extensible actuator, which ensures press of the braking segment towards the surface of a road. Disadvantage of the brake is lower effectivity in turnings, because even though it ensures braking of the vehicle, but not avoids the collision.

The aim of the present invention is to disclose an emergency brake, which eliminates the above mentioned disadvantages of the state of the art.

### Feature of the invention

The above mentioned disadvantages are considerably eliminated by an emergency brake 1 data connected to a control unit 2 of a vehicle, where the emergency brake 1 comprises a braking segment 5 connected to the bottom of the vehicle by an expansible actuator 6, which is designed to push the braking segment 5 towards a road, when a braking impulse is transmitted from the control unit 2, where the emergency brake 1 is designed to be rotary at a plane parallel to the surface of a road, where the braking segment 5 is connected to the vehicle by supporting element 9, which is rotary connected by a shaft 10 with the actuator 11 of rotational movement, which is firmly connected to the vehicle.

In advantages embodiment the connection between the braking segment 5 and the supporting element 9 is performed by pull bar 7 and expansible actuator 6, which are connected swingly to the supporting element 9 and the braking segment 5 by pivots 8.

In other advantages embodiment the direction of pushing force is perpendicular to the surface of a road, or swinging.

In other advantages embodiment the emergency brake is arranged on the bottom of a vehicle between its front and rear wheels.

In other advantages embodiment the expansible actuator 6 and/or the actuator 11 of rotational movement is a linear motor.

In other advantages embodiment the braking segment 5 or the supporting element 9 is sprung with regards to the vehicle.

In other advantages embodiment the edge of the braking segment 5 has a chamfer 12.

In other advantages embodiment the friction surface of the braking segment 5, which is in contact with the surface of a road, is made of rubber and/or metal and/or provided with sample.

In other advantages embodiment the braking segment 5 is a multi-surface segment, where each surface is provided with a different type of a friction material, where the braking segment 5 comprises a rotary driving unit 13 arranged inside the braking segment 5 at its rotary axis.

### Description of the drawings

The invention will be further clarified by use of figures, where Fig. 1 presents an emergency braking system, Fig. 2 presents an example of an emergency brake according to the invention with a pivoted pressed brake segment, and Fig. 3 presents an example of the emergency brake according to the invention with a turnable brake segment.

### Preferred embodiments of the invention

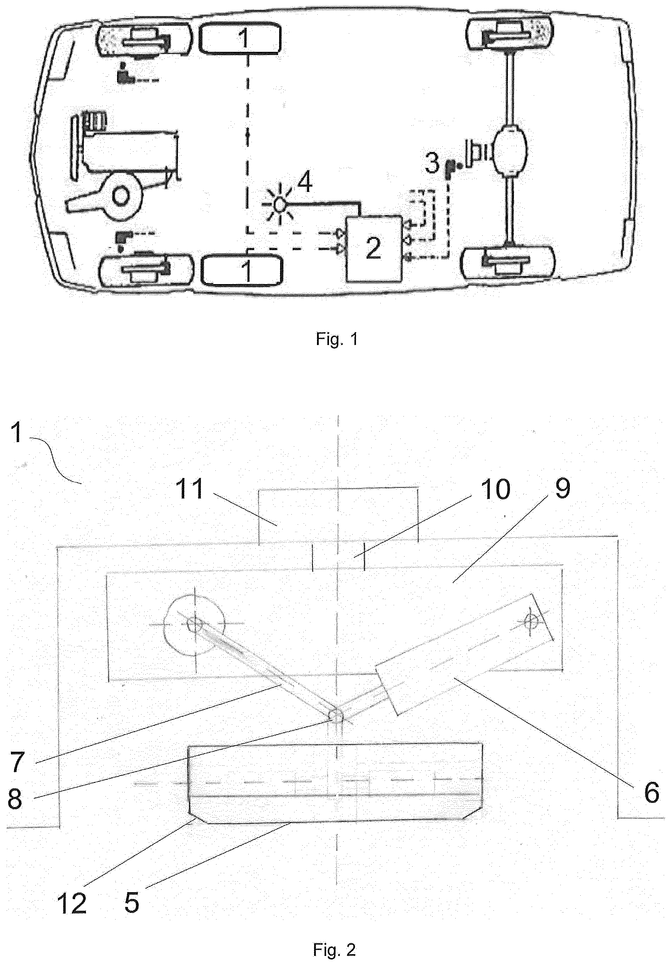

An emergency braking system for vehicles presented in Fig. 1 comprises an emergency brake 1 according to the invention arranged under a vehicle, data connected with an electronical control unit 2 of the vehicle, which is advantageously equipped with a sensor 3 for measuring of rotation of wheels and/or a warning light 4 for signalization of proper function of the system.

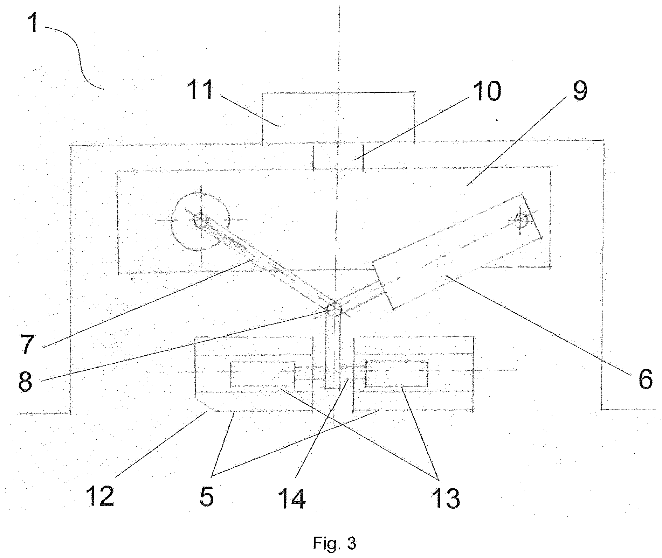

The emergency brake 1 according to the invention, presented in detail in Fig. 2 and 3, is arranged on the lower part of the vehicle, advantageously between its front and rear wheels, and comprises a braking segment 5 connected with the lower part of vehicle by expansible actuator 6, which when receives a braking impulse transmitted from the control unit 2 pushes the braking segment 5 into contact with the surface of a road. The press is possible to be linear, for example performed by perpendicular movement towards the road, or piloting, where the braking segment 5 is connected with the vehicle in addition by a pull bar 7, which is rotary connected both to the vehicle and to the braking segment by pivot 8.

In advance the emergency brake 1 according to the invention is rotary in parallel with the surface of a road. According to the embodiment, the braking segment 5, respectively the pull bar 7 and/or the expansible actuator 6, is connected with the vehicle by supporting element 9, which is rotary connected by shaft 10 with an actuator 11 of the rotation, which is firmly connected with the vehicle. The rotation ability is advantageous for enabling turning of the vehicle during its brake down movement, to avoid collision with a possible barrier or to safe passing of a turning. By that way the vehicle can be braked down only on an external side of the turning, it means only by pressurization of an external braking segment 5.

Advantageously, the expansible actuator 6 and/or the actuator 11 of rotation is a linear motor.

The braking segment 5, respectively the supporting element 9, is possibly sprung with respect to the vehicle, or provided by chamfer 12 on its edge, to ensure easier movement over the road.

Advantageously, the friction surface of the braking segment 5, which is in contact with the road, is made of rubber or metal, and more advantageously provided with a pattern. Adhesion between the braking segment 5 and the road can be improved depending on any weather condition, if the braking segment 5 is a multi-surface segment, where each surface is provided with a different type of a friction material. Its turning according to the actual weather condition ensures maximal braking effect for any specific weather situation. In the example presented in Fig. 3 the turning is performed by rotary driving unit 13 arranged inside the turned braking segment 5 at its rotary axis. In such performance the expansible actuator 6 and/or the pull bar 7 is connected to a pin 14, which is extruding the braking segment 5 at its rotary axis. There are possibly two braking segments 5 interconnected by the pin 14 at its rotary axis, to which the expansible actuator 6 and/or the pull bar 7 is connected. Each braking segment 5 can by provided with friction surfaces made by multiple materials.

The principle of the braking system comprises the emergency brake according to the invention follows:

When the control unit 2 evaluates an emergency situation, for example by detection of higher pushing force, which acts to a brake pedal, the control unit 2 forwards a brake impulse to the expansible actuator 6, which immediately press the braking segment 5 towards the surface of a road, by which the brake friction surface of the vehicle is increased, so as the braking effect. The main feature of the invention is the fact, that length of the braking distance is directly proportional to the size of the mutual surfaces between a vehicle and the surface of a road.

The emergency braking system according to the invention is extremely beneficial for any extreme weather conditions, i.e. humidity or glaze ice. However, because of the high braking force it is not convenient to use it as a main braking system, but only as an emergency braking system. Furthermore, because of the fact, that tires are designed not only for good braking quality but also for good rotary property, for the braking segments 5 of the brake according to the invention only braking quality is important.

Because the mutual friction surface between a vehicle and the surface of a road is several times increased compare to the common systems, where mutual friction is defined only by size of tire, the braking distance is markedly shortened.

## Claims

1. Emergency brake 1 data connected to a control unit 2 of a vehicle, where the emergency brake 1 comprises a braking segment 5 connected to the bottom of the vehicle by an expansible actuator 6, which is designed to push the braking segment 5 towards a road, when a braking impulse is transmitted from the control unit 2, **characterized in, that** the emergency brake 1 is designed to be rotary at a plane parallel to the surface of a road, where the braking segment 5 is connected to the vehicle by supporting element 9, which is rotary connected by a shaft 10 with the actuator 11 of rotational movement, which is firmly connected to the vehicle.

2. Emergency brake according to the claim 1, **characterized in, that** the connection between the braking segment 5 and the supporting element 9 is performed by pull bar 7 and expansible actuator 6, which are connected swingly to the supporting element 9 and the braking segment 5 by pivots 8.

3. Emergency brake according to the claim 1 or 2, **characterized in, that** direction of pushing force is perpendicular to the surface of a road, or swinging.

4. Emergency brake according to any of the claims 1 to 3, **characterized in, that** the emergency brake is arranged on the bottom of a vehicle between its front and rear wheels.

5. Emergency brake according to any of the claims 1 to 4, **characterized in, that** the expansible actuator 6 and/or the actuator 11 of rotational movement is a linear motor.

6. Emergency brake according to any of the claims 1 to 5, **characterized in, that** the braking segment 5 or the supporting element 9 is sprung with regards to the vehicle.

7. Emergency brake according to any of the claims 1 to 6, **characterized in, that** the edge of the braking segment 5 has a chamfer 12.

8. Emergency brake according to any of the claims 1 to 7, **characterized in, that** the friction surface of the braking segment 5, which is in contact with the surface of a road, is made of rubber and/or metal and/or provided with sample.

9. Emergency brake according to any of the claims 1 to 8, **characterized in, that** the braking segment 5 is a multi-surface segment, where each surface is provided with a different type of a friction material, where the braking segment 5 comprises a rotary driving unit 13 arranged inside the braking segment 5 at its rotary axis.
